# EUROPEAN PATENT APPLICATION

(11) **EP 4 761 020 A1**
(43) Date of publication of application: **17.06.2026**
(21) Application number: 24220372.7
(22) Date of filing: 16.12.2024
(51) Int. Cl.: H02B 1/21

(54) **ELECTRICAL ADAPTER SYSTEM, ELECTRICAL ASSEMBLY, AND METHOD FOR CONNECTING AN ELECTRICAL DEVICE TO A BUSBAR SYSTEM**

(71) Applicant: Wöhner Besitz GmbH, 96472 Rödental (DE)
(72) Inventor: Masel, Joram, 96328 Küps-Oberlangenstadt (DE); Steinberger, Philipp, 96450 Coburg (DE)
(74) Representative: Bratovic, Nino Maria

(57) **Abstract**

The present invention provides an electrical adapter system (1000) for a busbar system, comprising:
a base module (100) and a mounting module (200);
the mounting module (200) comprising a mounting surface (230) for mounting an electrical device (3000) thereto, the mounting module (200) and the base module (100) being configured such that the mounting module (200) is attachable, by being moved along an attaching direction (D), to the base module (100) within the trough-shaped recess (111);
wherein the base module housing (100) is formed with first openings (121-i) for device connection terminals (142-i), each first opening (121-i) having a first portion (122-i) for allowing a first end (32-i) of a respective first connector element (31-i) of the electrical device (3000) to enter when being moved along the attaching direction (D), and a second portion (123-i) that extends from the corresponding first portion (122-i) along the attaching direction (D) for allowing the first ends (32-i) of the first connector elements (31-i) to travel along in the attaching direction (D).

## Description

### Field of the invention

The invention relates to an electrical adapter system, an electrical assembly, and to a method for connecting an electrical device to a busbar system.

### Background of the invention

Busbar systems, in which electrical power is carried by a plurality of busbars and electrical devices are mounted on the busbars, are increasingly in demand.

At the same time, a large number of electrical device designs is already available, not all of them configured to be mounted directly to busbars. One solution to this is provided by electrical adapters on which the electrical devices can be mounted, and which in turn can be mounted on the busbars. However, the large number of differently designed electrical devices leads to a requirement of a large number of differently designed electrical adapters.

Moreover, busbar systems typically carry a large number of devices so that, whenever an additional device is to be mounted thereon, or a device is to be dismounted therefrom, the situation often arises that the busbars would have to be disconnected from their power supply in order to protect the user. On the other hand, if it is desired that the mounting or dismounting is performed while the busbars of the busbar system are carrying live current, the safety of the user is a major concern.

### Summary of the invention

According to the foregoing, it is desirable to provide an electrical adapter system that is easily adjustable to different designs of electrical devices. It is also desirable that the electrical adapter system provides a high degree of safety to a user that manipulates the electrical adapter system while the busbars carry live current.

These objects are provided by the independent claims of the present invention.

According to a first aspect, the invention provides an electrical adapter system for a busbar system, comprising:
a base module and a mounting module;
the base module comprising a base module housing having a trough-shaped recess;
the mounting module comprising a mounting surface for mounting an electrical device thereto, the mounting module and the base module being configured such that the mounting module is attachable, by being moved along an attaching direction, to the base module within the trough-shaped recess,
wherein, when the mounting module is attached to the base module in the trough-shaped recess, the mounting surface is set back from a mouth of the trough-shaped recess along the attaching direction;
the base module comprising a plurality of busbar connection terminals, each busbar connection terminal configured to be mounted on a corresponding busbar of a busbar system for an electrical connection thereto;
the base module further comprising a plurality of first device connection terminals electrically connected to a corresponding one of the plurality of busbar connection terminals;
wherein each device connection terminal is configured to receive a first end of a respective first connector element;
wherein the base module housing is formed with a first opening for each of the first device connection terminals, each first opening having a first portion for allowing the first end of the respective first connector element to enter when being moved along the attaching direction, and a second portion that extends from the corresponding first portion into the trough-shaped recess along the attaching direction for allowing the first ends of the first connector elements to travel along in the attaching direction.

Thus, one of the particular advantages of the present invention is that the electrical device, mounted on the mounting module, will be accommodated within the trough-shaped recess, while electrical connections are being made in directions perpendicular to the attaching direction, through the base module housing, which greatly increases the safety of users during the mounting or dismounting.

Advantageously, even when the base module is mounted on a busbar system carrying live current, an electrical device mounted on the mounting module can be safely attached, together with the mounting module: first, the connector elements will completely enter the first portions of the first openings such that they can no longer be (easily, or at all) touched by a user. Only then, continuing the motion along the attaching direction, the connector elements will electrically contact the current-carrying device connection terminals.

The mounting module is optional. In variants in which the electrical adapter system (or: electrical adapter) is provided without a mounting module, the base module is configured such that the electrical device is attached (or: mounted) directly in the trough-shaped recess, along the attaching direction. The base module, in particular the bottom of the trough-shaped recess (which in these variants itself forms a mounting surface) may be specifically adapted to conform to a particular electrical device or a type or class of electrical devices, for example to a particular circuit breaker. Since the electrical connections between the electrical device and the base module is advantageously not routed through the mounting module, the absence of the mounting module does not impact them.

The mechanical mounting of the electrical device to the base module may be provided by the same mechanism as for the mounting module, and/or at electrical connection terminals of the electrical device.

The surface of the base module housing in which the second portions of the first openings are arranged, is arranged preferably essentially perpendicular to the surface in which the first portions of the first openings are arranged, for example, in an angle between 70° and 110°, more preferably between 80° and 100°, and most preferably between 88° and 92°.

In some advantageous embodiments, refinements, or variants of embodiments, each first device connection terminal is accessible only via the corresponding first opening within a base module housing of the base module, wherein the first openings are finger-safe, in particular according to the IP20 and/or NEMA 1 standard or higher.

In some advantageous embodiments, refinements, or variants of embodiments, each first device connection terminal is set back along the attaching direction into the base module housing from the respective first opening, more specifically from the first portion of the respective first opening. Preferably, the distance by which the first device connection terminals are set back is at least as large as the extent, in the attaching direction, of free ends (designated as "first ends" in the following) of connector elements connected to the electrical device. In this way, the first ends of the connector elements only come into electrical contact with the device connection terminals when they can no longer be touched by a user.

In some advantageous embodiments, refinements, or variants of embodiments, the device connection terminals are each arranged along a line perpendicular to the attaching direction. Specifically, the device connection terminals may be arranged in parallel to a length L direction of the base module housing, and perpendicular to a depth D direction (equal to the attaching direction) as well as perpendicular to a width W direction of the base module housing. The openings and/or the device connection terminals may be equally or unequally spaced from one another, in particular in a direction parallel to the width W direction.

In some advantageous embodiments, refinements, or variants of embodiments, the device connection terminals are each arranged along a line parallel to the attaching direction, for example implemented as pin contacts.

The first portions of the first openings may be arranged in a plane parallel to the width-length plane, and the second portions in a plane parallel to the width-depth plane. In this way, it is provided that electrical connections between the electrical device and the base module are essentially achieved along the length L direction, perpendicular to both the attaching direction and the direction in which the busbars extend. This combines safety for the user with good visibility of the connection.

In some advantageous embodiments, refinements, or variants of embodiments, the base module comprises a plurality of second device connection terminals, each configured to receive a first end of a respective second connector element. All of the advantageous features described for the first openings and the first device connection terminals are equally applicable to second openings and second device connection terminals that may be provided on the opposite side (from the first openings and first device connection terminals) of the trough-shaped recess. Thus, for example, both a current input and a current output into/from the electrical device can be electrically connected safely and simultaneously. The second openings are advantageously arranged in a manner mirroring the first openings (by a symmetry plane parallel to the width-depth plane). This arrangement provides the considerable advantage that all electrical connections, in particular from the busbars through to the first device connection terminals and/or from the second device connection terminals through to the output terminals, are fixed within the base module and do not have to be changed (loosened, unlatched, reconfigured, etc.) in any way when the electrical device is removed or substituted for another.

The first and/or second device connection terminals may be configured such that they guide the first end of a respective connector element along in the attaching direction, in particular to ensure a good contact while the mounting module and the electrical device are being attached. Additionally, or alternatively, the first and/or second openings may be configured such that they guide the first end of a respective connector element along in the attaching direction.

In some advantageous embodiments, refinements, or variants of embodiments, the base module further comprises a plurality of output terminals, each electrically connected to a corresponding one of the second device connection terminals. Preferably, the electrical adapter system is configured for bi-directional transfer of electrical power between the busbar connection terminals and the output terminal, such that any kind of electrical device, even a bi-directional one, can be accommodated. In other variants, the electrical adapter system is configured either as a feed-in adapter or as a feed-out adapter. In a feed-in adapter, as the term is used herein, electrical power is provided from the busbars, over the electrical adapter system, the electrical device, and again the electrical adapter system, to another device (e.g., a motor or the like). In a feed-out adapter, electrical power is input into the electrical adapter system from another device, then routed through the electrical device, then through the electrical adapter system again, and then to the busbars.

In some advantageous embodiments, refinements, or variants of embodiments, the electrical adapter system further comprises a plurality of first connector elements, wherein the first ends of the first connector elements are formed as flat strips, the first device connection terminals are formed as narrow slots extending along the attaching direction, and the first ends of the first connector elements are electrically connected to second ends of the first connector elements, which are connected or configured to be connected to first device terminals of the electrical device.

Preferably, the electrical adapter system comprises a plurality of sets of differently-shaped first connector elements, wherein the first ends (or: free ends) of the first connector elements is equal over all sets, and wherein the second end of the first connector elements is different from set to set. Thus, all kinds of different first device terminals of electrical devices can be connected, via an appropriately chosen set of first connector elements, to the first device connection terminals. It shall be understood that everything taught herein about the first connector elements equally applies to the second device connection terminals.

Preferably, first and second connector elements are identical. Since typically all device terminals of electrical devices are of the same type, then a single type of connector element per type of device terminal will suffice for the user to be able to mount the electrical device to the busbar system using the electrical adapter system of the present invention.

In some advantageous embodiments, refinements, or variants of embodiments, the first ends of the first (and/or second) connector elements are rigidly, and preferably integrally, connected to the second ends of the first (and/or second, respectively) connector elements. More preferably, the entire first (and/or second) connector element is formed monolithically from a piece of metal. This makes the connector element robust yet easy to manufacture.

In some advantageous embodiments, refinements, or variants of embodiments, the base module comprises a plurality of latching elements configured to latch the mounting module to the base module for attaching the mounting module to the base module. In other words, the latching elements are configured to latch the mounting module in place when it is in the desired position with respect to the base module. Preferably, the latching elements are pre-loaded (or: biased) towards the latching position via a spring-type mechanism. This minimizes the need for maintenance and yet provides a robust latching such that the electrical adapter system may be mounted on the wall in any orientation, or even overhead.

In other variants, the latching elements may be provided and configured to latch the electrical device directly to the base module when it is in the desired position, without any mounting module in between.

In some advantageous embodiments, refinements, or variants of embodiments, at least one sensor unit is arranged at or about at least one of the busbar connection terminals for measuring at least one electrical parameter of the current therethrough. Preferably one sensor unit is arranged at or about multiple, in particular all, of the busbar connection terminals. Sensor unit lines may be provided that transport sensor data from each of the sensor units to a sensor data terminal, where the data are collected and may be collectively output, either wirelessly or in a wirebound manner.

According to a second aspect, the invention also provides an electrical assembly, comprising the system according to any embodiment of the first aspect of the present invention, and an electrical device mountable or mounted to the mounting surface of the mounting part.

According to a third aspect, the invention further provides a method for connecting an electrical device to a busbar system, comprising at least steps of:
mounting a base module to a plurality of busbars of a busbar system (with or without using tools);
mounting the electrical device to a mounting surface of a mounting module while the mounting module is separated from the base module;
attaching the mounting module, with the electrical device mounted to it, to the base module by moving it along an attaching direction into a trough-shaped recess in a base module housing of the base module,
wherein at least first connector elements that are rigidly connected with the electrical device are inserted, concurrently with the attaching of the mounting module to the base module, into corresponding first portions of first openings within the base module housing and then from there on, along second portions of the first openings that extend into (i.e., along the walls of) the trough-shaped recess in the attaching direction, where, after being moved further along the attaching direction, they are inserted into first device connection terminals which are electrically connected to a respective one of the plurality of busbars.

As has been described in the foregoing, preferably (essentially) at the same time when the first connector elements are inserted into the first openings, second connector elements rigidly connected to the electrical device are inserted into second openings in the base module housing. Analogously, the second connector elements are first inserted into corresponding first portions of the second openings and then moved along second portions of the second openings which extend into (i.e., along the walls of) the trough-shaped recess, and finally inserted into second device connection terminals, each electrically connected to a respective output terminal.

Thus, while the first and second connector elements are inserted into the first and second openings, respectively, via the respective second portion, they extend from the electrical device essentially directly into the base module housing via said second portion. The electrical adapter system is configured such that any gap between the electrical device and the base module, when the electrical device is accommodated in the trough-shaped recess, is finger-safe, in particular according to IP20.

In some advantageous embodiments, refinements, or variants of embodiments, the mounting module is attached to the base module while the plurality of busbars is current-carrying.

In other variants, the invention further provides a method for connecting an electrical device to a busbar system, comprising at least steps of:
mounting a base module to a plurality of busbars of a busbar system;
attaching the electrical device to the base module by moving it along an attaching direction into a trough-shaped recess in a base module housing of the base module,
wherein at least first connector elements that are rigidly connected with the electrical device are inserted, concurrently with the attaching of the electrical device to the base module, into corresponding first portions of first openings within the base module housing and then from there on, along second portions of the first openings that extend into (i.e., along the walls of) the trough-shaped recess in the attaching direction, where, after being moved further along the attaching direction, they are inserted into first device connection terminals which are electrically connected to a respective one of the plurality of busbars.

In some advantageous embodiments, refinements, or variants of embodiments, at least second connector elements that are rigidly connected with the electrical device are inserted, concurrently with the attaching of the electrical device to the base module, into corresponding first portions of second openings within the base module housing and then from there on, along second portions of the second openings that extend into the trough-shaped recess in the attaching direction, where, after being moved further along the attaching direction, they are inserted into second device connection terminals which are electrically connected to a respective output terminal.

The second connector elements are preferably provided at another side of the electrical device than the first connector elements, in particular at the opposite side. Each of the first connector elements may be arranged (essentially, or exactly) in line with a corresponding one of the second connector elements. The output terminals are different from the busbar terminals, such that, after the electrical device is attached to the base module, the electrical device is electrically arranged between the busbars and the output terminals.

As another main advantage of the invention, the mounting of the electrical device to the base module may be performed while the busbars are current-carrying.

The invention further provides, according to a fourth aspect, a mounting module for an adapter system for a busbar system, comprising:
a mounting surface for mounting an electrical device thereto;
a mounting module housing with at least one cutout window arranged in the mounting surface; and
a plurality of mounting plates arranged within the mounting module housing;
wherein each mounting plate is provided with at least one fastening element and is shiftable along at least one axis such that the position of the corresponding fastening element is shiftable within the mounting surface.

One central idea behind this is that in this manner, the mounting module can be easily adapted to the geometry of fastening counter-elements of whatever electrical device is intended to be mounted to it.

For example, the fastening elements may be provided as fastening receptacles, and the fastening counter-elements as screws or the like, configured to be inserted into and fixed within the fastening receptacles.

The mounting module may be provided as a part separate from a base module that is configured to electrically connect the electrical device mounted on the mounting module to a plurality of busbars of a busbar system, e.g. the base module of the electrical adapter system according to an embodiment of the present invention. In other variants, the mounting module and the base module may be integrated into a single module, i.e., a module having, apart from the mounting surface for the electrical device, also busbar connection terminals as described herein, for electrical and/or mechanical engagement with the plurality of busbars.

In some advantageous embodiments, refinements, or variants of embodiments, at least two of the mounting plates are coupled with one another to a pair such that shifting one of the two coupled mounting plates of the pair in one direction along one of the at least one linear axis results in the other of the two coupled mounting plates of the pair shifting in an opposite direction along the same linear axis. Mounting plates can be part of more than one pair. In some embodiments, there are four mounting plates in total, wherein each of the mounting plates is paired with two other mounting plates in a respective pair, one for each of two perpendicular axes.

In some advantageous embodiments, refinements, or variants of embodiments, each of the mounting plates is movable along two axes perpendicular to one another. The movement along each of these axes may be guided by a corresponding manual actuating element.

In some advantageous embodiments, refinements, or variants of embodiments, four mounting plates are provided which are shiftable by means of a shifting mechanism of the mounting module. The shifting mechanism may comprise two first bar elements, each arranged longitudinally in parallel to a first axis, and two second bar elements, each arranged longitudinally in parallel to a second linear axis perpendicular to the first linear axis.

Each of the first and second bar elements may be formed with a respective cutout window at each of its longitudinal ends. Each fastening element may comprise a protrusion, for example a socket, extending from the mounting surface into the mounting module housing, wherein each protrusion passes through a corresponding one of the cutout windows of one of the first bar elements and a corresponding one of the cutout windows of one of the second bar elements. Thus, moving the first and/or second bar elements engages the protrusion and thus shifts the fastening element in a desired manner.

In some advantageous embodiments, refinements, or variants of embodiments, the first bar elements are restricted to being shifted along the second axis (or: dimension) by corresponding guiding elements in two internal side walls of the mounting module housing, and/or the second bar elements are restricted to being shifted along the first axis (or: dimension) by corresponding guiding elements in two other internal side walls of the mounting module housing.

In some advantageous embodiments, refinements, or variants of embodiments, the mounting plates are shiftable by shifting the first bar elements and/or the second bar elements such that their cutout windows move the protrusions (e.g., sockets) of the fastening elements along.

In some advantageous embodiments, refinements, or variants of embodiments, a first one of the first bar elements is rigidly connected to a corresponding first linkage, a second one of the first bar elements is rigidly connected to a corresponding second linkage. The first and the second linkage may be coupled via a first gear mechanism configured to transmit the movement of the first one of the first bar elements in a first direction along the second linear axis into a movement of the second one of the first bar elements in a second, opposite direction along the second linear axis.

In some advantageous embodiments, refinements, or variants of embodiments, the first and the second linkage are provided with mutually facing teeth coupled by a cogwheel in between as the first gear mechanism. Other variants for coupling the first and the second linkage such that they more in the opposite direction from one another are possible as well, for example, via a coupling rod.

In some advantageous embodiments, refinements, or variants of embodiments, the first linkage is connected to a manual actuating element passing through one of the side walls of the mounting module housing which is provided for manual shifting of the first bar elements in opposite direction from one another. In some advantageous embodiments, refinements, or variants of embodiments, the second linkage is connected to a manual actuating element passing through one of the side walls of the mounting module housing which is provided for manual shifting of the second bar elements in opposite direction from one another.

In some advantageous embodiments, refinements, or variants of embodiments, each mounting plate comprises at least two fastening elements of different size and/or form.

The invention further provides, according to a fifth aspect, an electrical adapter system for a busbar system, comprising: a mounting module according to any embodiment of the fourth aspect; and a base module configured to be mounted on a plurality of busbars of the busbar system, wherein the mounting module is integrated with, or attachable to, the base module. In the latter case, the base module may comprise an attaching surface, wherein the mounting module is configured to be attached to the base module at the attaching surface.

The invention also provides, according to a sixth aspect, an electrical assembly, comprising the electrical adapter system according to an embodiment of the fifth aspect, and an electrical device, wherein the mounting plates are shifted to adjust the fastening elements to corresponding to fastening counter-elements of the electrical device, and the fastening counter-elements are fastened to the adjusted fastening elements.

The invention further provides, according to a seventh aspect, a method for connecting an electrical device to a busbar system, comprising at least steps of:
mounting the base module of the electrical adapter system according an embodiment of the fifth aspect, to the plurality of busbars of the busbar system;
adapting the mounting surface of the mounting module of the electrical adapter system by shifting at least one of the mounting plates to correspond to fastening counter-elements of the electrical device;
mounting the electrical device to the mounting module by fastening the fastening counter-elements to the fastening elements. In some advantageous embodiments, refinements, or variants of embodiments, the shifting of at least one mounting plate comprises a shifting of all mounting plates concurrently.

In cases where the base module and the mounting module are formed as separate from one another, the method may further comprise a step of attaching the mounting module to the base module. In some advantageous embodiments, refinements, or variants of embodiments, the mounting module is attached to the base module after the electrical device has been mounted to the mounting module and after the base module has been mounted on the plurality of busbars. In particular, the mounting module may be attached to the base module while the plurality of busbars are current-carrying.

In variants where the base module and the mounting module are integrated into one another, the mounting of the electrical device to the mounting module may in particular be done after the base module has been mounted on the plurality of busbars. Again, the invention advantageously provides the option that the mounting of the electrical device to the mounting module and the base module may be done while the plurality of busbars is current-carrying.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description.

Scales within drawings may be accurate in some variants, and may be seen as simply illustrative in other variants.

In the drawings:
- Fig. 1: schematically shows an electrical adapter system according to an embodiment of the present invention, and an electrical assembly according to another embodiment of the present invention;
- Fig. 2: shows the system and the assembly of Fig. 1 from the rear side;
- Fig. 3: shows details of the system of Fig. 1 and Fig. 2;
- Fig. 4: shows the interior of a base module of the system of Fig. 1-3;
- Fig. 5: shows the interior of the mounting module of the system of Fig. 1-4;
- Fig. 6A: and Fig. 6B show three-dimensional views of details of the system of Fig. 1-5;
- Fig. 7: shows a schematic depiction of an electrical device for use with the system of Fig. 1-6, and as part of the electrical assembly of Fig. 1 and Fig. 2;
- Fig. 8: shows an exemplary design of a connector element of the system of Fig. 1-6B;
- Fig. 9: shows additional details of the system of Fig. 1-6B;
- Fig. 10: shows a schematic flow diagram illustrating a method according to another embodiment of the present invention; and
- Fig. 11: shows a schematic flow diagram illustrating a method according to yet another embodiment of the present invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings. In general, the Figures relate to a common coordinate system L, D, W, related to how different components are designed to be arranged with respect to one another.

### Detailed description of the drawings

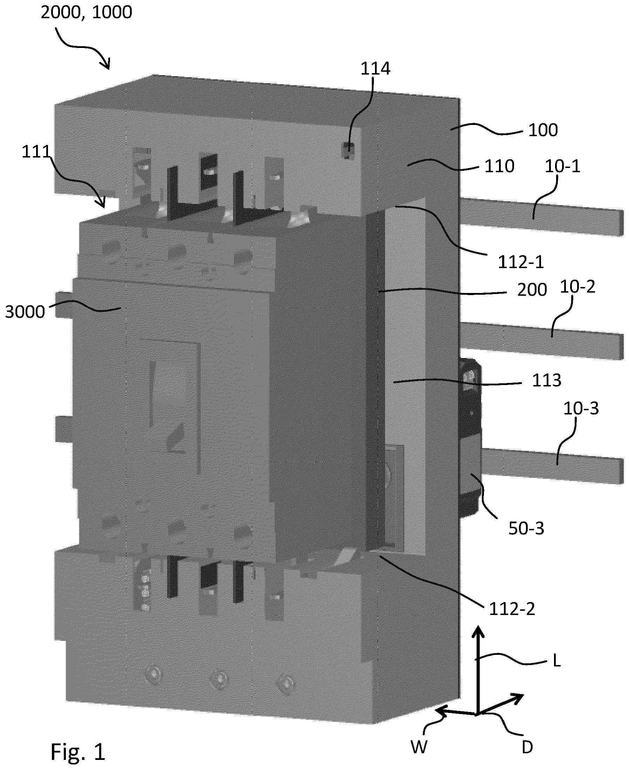

Fig. 1 shows an electrical adapter system 1000 according to an embodiment of the present invention, and an electrical assembly 2000 according to another embodiment of the present invention.

The electrical adapter system 1000 is provided to provide a mechanical and electrical connection of an electrical device 3000 to a busbar system, which is here, as an example, shown as comprising three busbars 10-1, 10-2, 10-3 (hereafter sometimes also collectively designated as 10-i). The electrical adapter system 1000 may be configured such that tools (e.g. a screwdriver or a more specialized tool) are required to connect and/or disconnect it to/from the busbars 10-i, or such that no tools are required for either or both.

The busbar system may also comprise only two busbars 10-i, or four, five, or even more busbars 10-i. The busbars 10-i may have protective covers or covering so as to be finger-safe, or may be uncovered. Individual busbars 10-i may be configured or installed to carry individual phases such as L1, L2, L3, N, PE and so on. The busbars 10-i may have any form, cross-section, or material known in the art.

The electrical assembly 2000 comprises at least the electrical adapter system 1000 and the electrical device 3000 and will be described in more detail in the following.

As seen in Fig. 1 in an overview, the electrical adapter system 1000 comprises, or consists of, a base module 100 and a mounting module 200. The base module 100 is configured for being mounted (electrically and mechanically) to a plurality of busbars 10-i of the busbar system.

In the following description, an exemplary situation is used in which the busbars 10-i extend in parallel to one another and to a direction in which a width W of the electrical adapter system 1000 (and of the base module 100 and of the mounting module 200) lies, and are distanced from one another in a direction parallel to a direction in which a length L of the electrical adapter system 1000 (and of the base module 100 and of the mounting module 200) lies.

The mounting module 200 is configured for being attached to (or: mounted on) the base module 100 along an attaching direction and further such that an electrical device 3000 can be mounted to it.

As has been described in the foregoing, one major advantage of the present invention is that the base module 100 is finger-safe, i.e., when it is mounted to the busbar system, a user may touch it at any point without coming into contact with any electrical current, even if one or more busbars are current-carrying.

The width W and the length L of the electrical adapter system 1000 form an orthogonal coordinate system together with a depth D of the electrical adapter system 1000. In direction of the depth D (the same direction as the attaching direction), first the electrical device 3000 is arranged, then the mounting module 200 on which it is mounted, then the base module 100 to which the mounting module 200 is attached, and then the busbars 10-i are arranged, when the electrical adapter system 1000 is in use. Fig. 1 also indicates that between the base module 100 and the busbars 10-i, one or more sensor units 50-3, for example electric current sensors, electric voltage sensors and/or the like may be arranged.

Moreover, the mounting module 200 is designed such that the electrical device 3000 can be mounted to it when the mounting module 200 is still separate from the base module 100, and then the mounting module 200 with the electrical device 3000 mounted to it can be attached to the base module 100, even when at least one busbar 10-i is still carrying electrical current. Advantageously, the mounting module 200 is adaptable for a plurality of different electrical devices 3000, in particular while the mounting module 200 is unattached to the base module 100, which makes the adapting easier and more comfortable.

The base module housing 110 may further comprise an unlatching opening 114 provided to allow to actuate a latching mechanism latching the mounting module 200 to the base module 100 in order to unlatch it. Preferably, the unlatching opening 114 is configured such that it can only be actuated using a tool in order to prevent unintentional unlatching.

Fig. 1 illustrates that the base module 100 comprises a base module housing 110 which as has a trough-shaped recess 111 configured such that the mounting module 200 can be attached to the base module 100 within the trough-shaped recess 111. The trough-shaped recess 111 can be bounded on both of its sides along the direction of the length L by walls 112-1, 112-2 (hereafter sometimes also collectively designated as 112-i) formed by the base module housing 110 which may be interrupted by one or more openings or gaps.

In the shown example intended for a busbar system with three busbars 10-i, three openings are visible on each side of the bounding walls of the trough-shaped recess 111, one for each of the phases carried by the busbars 10-i, as will be described in more details in the following.

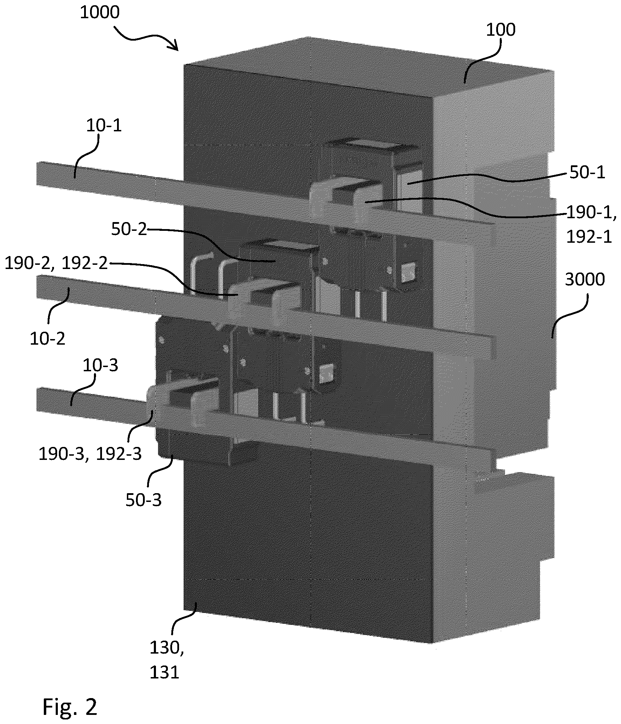

Fig. 2 shows the electrical adapter system 1000 and the electrical assembly 2000 from the rear side, i.e., against the direction of the depth D. Clearly shown is how the base module 100 comprises, for the electrical and mechanical connection to each busbar 10-i, a busbar connection terminal 190-1, 190-2, 190-3 (hereafter sometimes also collectively designated as 190-i).

In the shown example, each busbar connection terminals 190-i is formed with (or, in other variants, as) one or more electrically conductive clamping hooks 192-1, 192-2, 192-3 (hereafter sometimes also collectively designated as 192-i) which are configured to be hooked over the corresponding busbar 10-i for at least a mechanical connection. The clamping hooks 192-i may also provide, or contribute to, an electrical connection to the corresponding busbar 10-i.

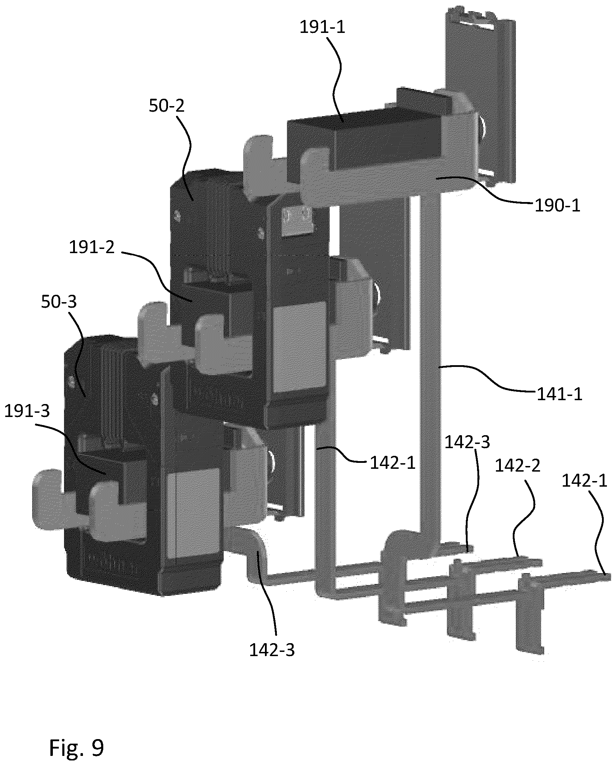

Alternatively or additionally, the electrical connection may be provided by a contacting piece arranged (see Fig. 9) at the front side of the busbars 10-i, i.e., at the side facing the base module 100. Using tightening means, e.g. one or more screws, the clamping hooks may be tightened, pressing the busbars 10-i, the contacting piece, and the first connection rails 141-i together for an improved electrical connection.

The contacting piece may be formed with protrusions that are formed to enter openings in a touch protection screen arranged about the busbars 10-i. The busbar connection terminals 190-i may have or be one or more knife-like (or: blade-like) flat clamping hooks, such as the two shown for each busbar connection terminal 190-i in Fig. 1, such that they may enter openings in the touch protection screen as well, to engage the busbars 10-i from behind (i.e., at a surface of the busbars 10-i that faces away from the base module 100).

Other connection techniques are usable as well, for example spring-loaded contacts (in particular self-spring-loaded contacts), plug-in contacts for correspondingly formed busbars 10-i with plug-in openings, pre-loaded contact assemblies that provide a clamping force when a latching is undone, and/or the like.

Fig. 2 shows also that the electrical adapter system 1000 may comprise a sensor unit 50-1, 50-2, 50-3 (hereafter sometimes also collectively designated as 50-i) for one or more of the busbars 10-i, here for all three busbar 10-i. The sensor units 50-i may comprise any, and any number, of sensor elements, in particular a current sensor. The shown arrangement of the sensor units 50-i will be described in more detail later with respect to Fig. 9.

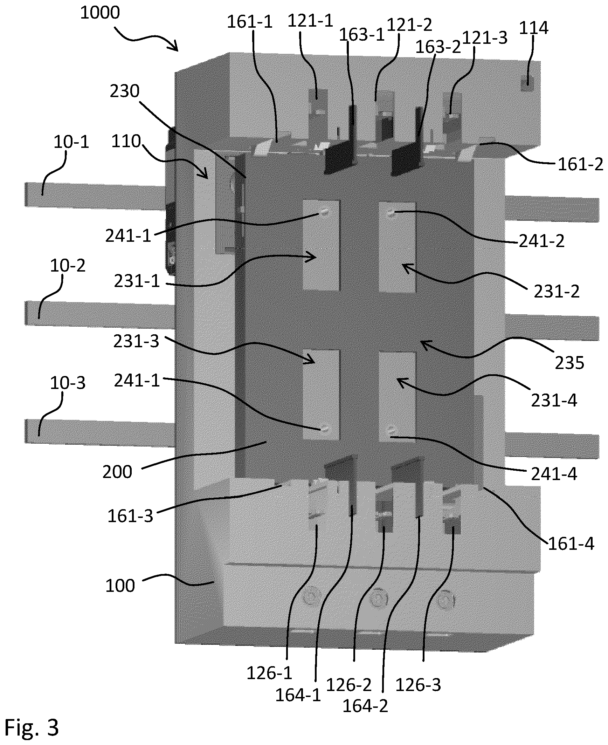

Fig. 3 shows the electrical adapter system 1000 with the electrical device 3000 removed such as to allow an almost-frontal, three-dimensional view of the electrical adapter system 1000. Although it is possible to attach the mounting module 200 to the base module 100 as shown, typically the mounting module 200 will only be attached to the base module 100 after the electrical device 3000 has been mounted on it. One reason for this is that the mounting is generally more comfortably done when the mounting module 200 can be accessed from all sides.

The mounting module 200 is accommodated within the trough-shaped recess 111 and is latched in place by means of (here: four) latching elements 161-1, 161-2, 161-3, 161-4 (hereafter sometimes also collectively designated as 161-i). Unlatching of the latching elements 161-i is achieved by actuating an unlatching mechanism via the unlatching opening 114, by which the latching elements 161-i are disengaged from the mounting module 200. In the shown example, the latching elements 161-i are formed as latching hooks, which are retracted into the base module housing, in the direction of the length L, to disengage. Advantageously, the latching members 161-i allow that the mounting module 200 can be attached to the base module 100 even when the base module 100 is mounted to a busbar system on a wall or even overhead. They also make the attachment of the mounting module 200 to the base module 100 resistant against jarring, shaking, and the like.

Fig. 3 illustrates also that the mounting module 200 is formed with a mounting surface 235 in or on its mounting module housing 230, the mounting surface 235 facing away from the base module 100 when the mounting module 200 is attached.

The mounting surface 235 is advantageously plane and comprises a number of fastening elements 241-1, 241-2, 241-3, 241-4 (hereafter sometimes collectively designated as 241-i). In the shown example, four fastening elements 241-i are shown, each formed as a fastening receptacle with a screw-type socket, but it should be understood that any other number or type of fastening elements 241-i may be provided as well. The fastening elements 241-i may be provided at fixed positions with respect to the mounting surface 235, or , preferably, some or all of the fastening elements 241-i may be movable, e.g. shiftable, within the mounting surface 230 within predefined ranges. Often, electrical devices 3000 produced by different companies have slightly different distances between their rearward-facing connectors; this can be compensated for by moving the fastening elements 241-i.

In the shown example, the mounting surface 235 is formed plane excluding a number of cutout windows 231-1, 231-2, 231-3, 231-4 (hereafter sometimes collectively designated as 231-i) formed therein. The mounting surface 235 is formed by an outer surface of the mounting module housing 230, and the cutout windows 231-i connect the inside of the mounting module housing 230 with its outside.

Inside the mounting module housing 230, shiftable mounting plates are arranged (as will be described in more detail in the following) on which the fastening elements 241-i are arranged.

For the electrical adapter system 1000, which is as an example configured for mounting it to a busbar system with three busbars 10-i, the base module housing 110 comprises a corresponding number of three first openings 121-1, 121-2, 121-3 (hereafter sometimes collectively designated as 121-i) and of three second openings 126-1, 126-2, 126-3 (hereafter sometimes collectively designated as 126-i). It shall be understood that in case of a different number of busbars 10-i (and, correspondingly, electrical phases), the number of first and second openings 121-i, 126-i may be the same.

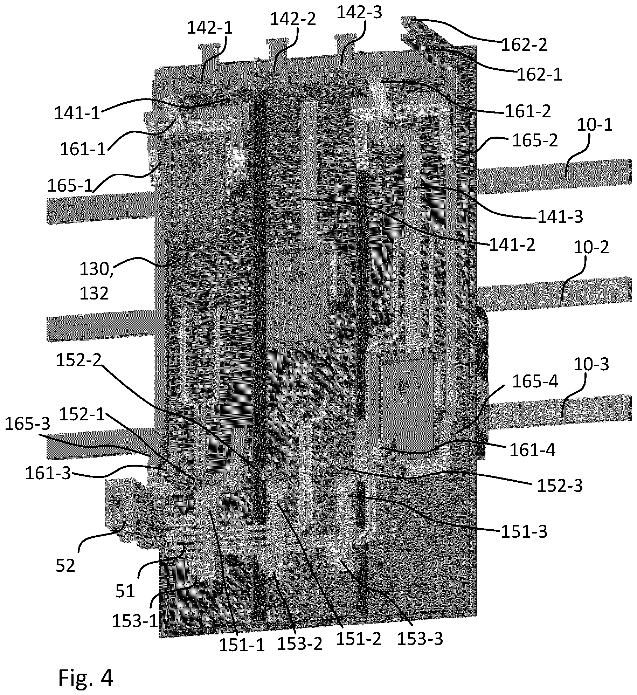

The first and the second openings 121-i, 126-i are preferably finger-safe such that a user cannot insert fingers into them. This means that the base module 100 may be mounted to current-carrying busbars 10-i without any risk that the user may come into electrical contact with them by touching any part of the base module 100. Inside the first and the second openings 121-i, 126-i, within the base module housing 110, corresponding first and second device connection terminals (see in particular Fig. 4) are arranged for providing electrical contact with the electrical device 3000, as will be described in more detail in the following.

In other variants, depending on the type of electrical device 3000 and the connector elements used, it may be necessary or convenient to form the first and/or second openings 121-i, 126-i larger than would be finger-safe. In these variants, the respective first and/or second openings 121-i, 126-i may be provided with cover elements that are configured to slide away, open, or part, when actuated (e.g. when connector elements are pressed against them or when the mounting module 200 or the electrical device 3000 engages with, e.g. presses against, actuators arranged elsewhere about the base module 100), in order to provide access to the first and/or second openings 121-i, 126-i. The cover elements may thus provide finger safety for the first and/or second openings 121-i, 126-i.

Each of the first and/or second openings 121-i, 126-i may be provided with a guiding geometry configured to guide a connector element to the respective device connection terminals 142-i, 152-i.

Between each two adjacent first or second openings 121-i, 22-i, phase divider sheets 163-1, 163-2, 164-1, 164-2 are arranged, for example in corresponding openings (e.g. slots) in the base module housing 110, in order to prevent switching gases to accumulate or interact. The base module housing 110, the mounting module housing 230 and the phase divider sheets 163-1, 163-2, 164-1, 164-2 are formed from one or more electrically non-conductive materials, e.g., a plastic material.

Fig. 4 shows the interior of the base module 100, with the base module housing 110 removed for better visibility. In particular by comparison with Fig. 3 it will be evident that underneath each of the first openings 121-i, a corresponding first device connection terminal 142-1, 142-2, 142-3 (hereafter sometimes collectively designated as 142-i) is arranged. Because the first openings 121-i are finger-safe, the first device connection terminals 142-i can only be reached by - correspondingly slim-sized - connector elements but not by fingers of a user. In the shown example, the first device connections terminals 142-i each comprise a two-pronged structure (e.g., a lyra-shaped contact) for receiving a connector element in between. The shape of the first device connection terminals 142-i is of course designed in line with the first ends of the connector elements. If the first ends of the connector elements are formed as flat strips, the first device connection terminals 142-i may be formed as narrows lots, and so on.

Each of the first device connection terminals 142-i arranged within the base module housing 110 is electrically connected to a corresponding one of the busbar connection terminals 190-i on the rear-side of the base module 100. In the shown embodiment, the first device connection terminals 142-i are integrally formed with first connection rails 141-1, 141-2, 141-3, which in turn are electrically connected to the busbar connection terminals 142-i.

Fig. 4 also shows second device connection terminals 152-1, 152-2, 152-3 (hereafter sometimes also collectively designated as 152-i) which are arranged within the base module housing 110 in a row. In the shown example, they comprise a two-pronged structure (e.g., a lyra-shaped contact), in particular formed in the same way as the first device connection terminals 142-i. The second device connection terminals 152-i are electrically connected, and here in particular integrally formed, with second connection rails 151-1, 151-2, 151-3 (hereafter sometimes also collectively designated as 151-i), which in turn are each electrically connected to a respective output terminal 153-1, 153-2, 153-3 (hereafter sometimes also collectively designated as 153-i).

The output terminals 153-i may be designated as such because, for example, the electrical assembly 2000 comprising the electrical adapter system 1000 may be configured such that electrical power is:
- provided at the busbars 10-i of the busbar system;
- fed via the busbar connection terminals 190-i and the first connection rails 141-1 to the first device connection terminals 142-i;
- fed via first device connectors from the first device connection terminals 142-i to the electrical device 3000;
- fed by the electrical device 3000 via second device connectors to the second device connection terminals 152-i;
- fed from there via the second connection rails 151-i to the output terminals 153-i.

However, the output terminals 153-i may also be designated as such because electrical power may be output from an external device to the output terminals 153-i such that electrical power is fed through the electrical assembly 2000 in reverse to the above-described such that electrical power is finally fed to the busbars 10-i of the busbar system via the busbar connection terminal 190-i.

In other words, the electrical adapter system 1000 is advantageously bi-directional, such that any predetermined direction of power transfer according to the electrical device 3000 may be enabled. When the electrical device 3000 is bi-directional itself, then the entire electrical assembly 2000 (comprising the electrical adapter system 1000 with the electrical device 3000 mounted thereto) is then bi-directional as well.

In the shown example, the output terminals 153-i are configured as screw-type clamping terminals (or: screw-type clamps), although any other type of terminal (e.g. push-in clamping terminal, spring-type clamping terminal, saddle-type clamping terminal, U-clamp terminal, etc.) may also be provided. Apart from direct clamping of conductors, also indirect connections are possible, for example the use of cable lugs, of laminated copper, or of copper rails which may be clamped or screwed on. Integrated terminal blocks for connecting multiple lines simultaneously may be used as well. In each case, the output terminals 153-i may be configured correspondingly.

Fig. 3 further shows that the electrical adapter system 1000 may comprise first phase divider sheets 163-1, 163-2 (hereafter sometimes also collectively designated as 163-i) and/or second phase divider sheets 164-1, 164-2 (hereafter sometimes also collectively designated as 164-i). Between each two adjacent first openings 121-i, 121-(i+1), a corresponding first phase divider sheet 163-i is arranged in order to prevent switching gases generated at different first device connection terminals 142-i to accumulate and intermingle. Similarly, between each two adjacent second openings 126-i, 126-(i+1), a corresponding second phase divider sheet 164-i is arranged in order to prevent switching gases generated at different second device connection terminals 152-i to accumulate and intermingle.

The first and second phase divider sheets 163-i, 164-i are preferably formed such that each can be inserted into a respective opening within the base module housing 110 and into an correspondingly aligned respective opening within the electrical device 3000. The phase divider sheets 163-i, 164-i can be inserted into the electrical device 3000 and then be inserted into the openings in the base module housing 110 concurrently with the mounting module 200 and the electrical device 3000 being attached to the base module 100. Alternatively, they can be inserted after the electrical device 3000 and the mounting module 200 have been attached, by sliding them, along the attaching direction (i.e. the depth D direction), into the respective two aligned openings.

Fig. 4 further shows how sensor unit lines 51 coming from the sensor units 50-i (here: two sensor unit lines 51 per sensor unit 50-i) cross the rear-side housing part (here a plate) of the base module housing 110 and are guided to a common sensor data terminal 52. The sensor data terminal 52 may be configured to combine the individual sensor data from the sensor unit lines 51 and output them jointly and/or consecutively.

The sensor data terminal 52 may be implemented for a wirebound or for a wireless data transmission to external receivers. Thus it may be configured with a socket for a wired contact plug to be plugged in (e.g., an RJ-type socket such as an RJ45 socket) and/or as a wireless transmitter or transceiver. The sensor data terminal 52 may also be configured to receive signals, for example query signals or setting signals configured to adapt settings of a measuring procedure provided by any or all of the sensor units 50-i. The wireless transmission and/or reception of signals may be implemented using any known technology and/or protocol, for example Ethernet, Bluetooth, ZigBee, and/or the like.

Fig. 4 also illustrate a possible configuration of an unlatching mechanisms, here comprising two unlatching actuators 162-1, 162-2 (hereafter sometimes also collectively designated as 162-i). In the shown example, the unlatching actuators 162-i are accessible, and actuatable, through the unlatching opening 114 in the front side (first surface along the attaching, or depth D, direction) of the base module housing 110, as seen in Fig. 3.

In the shown embodiment, the mechanism for unlatching the latching elements 161-i requires that an elongated tool, e.g. a screwdriver, is inserted into the unlatching opening 114 along the attaching direction, thus driving the two shiftable unlatching actuators 162-i apart, along different directions parallel to the length L direction. In order to facilitate this, the unlatching actuators 162-i are formed such that there is a wedge-shaped volume between their forward portions into which the elongated tool can enter und by which the elongated tool is guided. Preferably, the mechanism for unlatching the latching elements 161-i further comprises a spring element (or: pre-loading element) configured to preload the unlatching actuators 162-i against unlatching, i.e., in the present example, configured to press the unlatching actuators 162-i towards one another.

One of the unlatching actuators 162-1 is coupled with the latching elements 161-1, 161-2 on one side of the trough-shaped recess 111, and the other one of the unlatching actuators 162-2 is coupled with the latching elements 161-3, 161-4 on the other side of the trough-shaped recess 111, for example via a respective rocker 165-1, 165-2, 165-3, 165-4 (hereafter sometimes also collectively designated as 165-i). Via the rockers 165-i, the linear motion caused by the unlatching actuators 162-i being moved apart by the elongated tool is translated into a pivoting motion of each of the latching elements 161-i in a direction away from the trough-shaped recess 111, thus releasing a mounting module 200 that has been latched therein.

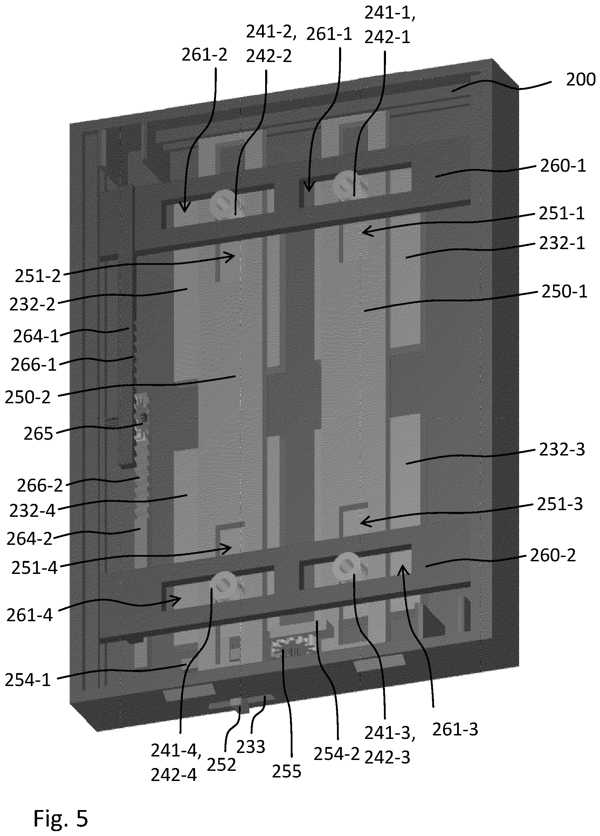

Fig. 5 shows the interior of the mounting module 200 according to possible embodiments, specifically, embodiments in which (at least some of) the distances between the fastening elements 241-i are adjustable such that they can be adapted to a variety of electrical devices 3000. It is then a simple matter for a user to select an electrical device 3000, take the detached mounting module 200, adapt the distances between the fastening elements 241-i thereof, mount the selected electrical device 3000 to the mounting module 200, and the attach the mounting module 200 together with the mounted electrical device 3000 to the base module 100, which may already be mounted on the busbar system. The configuration of the electrical adapter system 1000 can advantageously ensure that the user cannot come into electrical contact with the busbars at any time during this procedure.

As is shown in Fig. 5, the mounting module housing 300 is configured as an rectangular box open on one side, namely, its rear side (parallel to and opposite the mounting surface 235) .

Inside, the fastening elements 241-i are each arranged on a different mounting plate 232-i. Each fastening element 242-i has a rearward protrusion which is shiftable, using a shifting mechanism, both in directions of the width W and of the length L of the mounting module 200 in order to concurrently move the respective mounting plate 232-i. In the shown example, the rearward protrusion is formed by a respective socket 242-i of each of the fastening elements 241-i. In this way, fastening counter-elements (e.g. screws) used to fasten the electrical device 3000 to the mounting plates 232-i find sufficient grip. Typically, the fastening counter-elements will be inserted into the electrical device 3000 from the rearward side, i.e., first into the receptacles 242-i at the side shown in Fig. 5, and then further into the rearward side of the electrical device 3000.

The shifting mechanism comprises two first bar elements 250-1, 250-2 (hereafter sometimes also collectively designated as 250-i), each arranged longitudinally in parallel to a first axis (here: the length L direction), and two second bar elements 260-1, 260-2 (hereafter sometimes also collectively designated as 260-i), each arranged longitudinally in parallel to a second axis (here: the width W direction) perpendicular to the first axis.

The shifting mechanism is configured such that the first bar elements 250-i always remain parallel and aligned with one another, and such that the second bar elements 260-i always remain parallel and aligned with one another as well. However, by the shifting mechanism, the distances both between the first bar elements 250-i (along the second axis) and between the second bar elements 260-i (along the first axis) are adjustable so as to adapt the mounting surface 230 for different electrical devices 3000.

Movement of the first bar elements 250-i along the first axis is limited, and movement along the second axis is guided, by means of corresponding guiding elements (e.g. notches, or, as shown, ledges) in internal side walls of the mounting module housing 230. Movement of the second bar elements 260-i along the second axis is limited, and movement along the first axis is guided, by means of corresponding guiding elements (e.g. notches, or, as shown, ledges) in other internal side walls of the mounting module housing 230.

Each of the first bar elements 250-i is formed with a respective cutout window 251-1, 251-2, 251-3, 251-4 (hereafter sometimes also collectively designated as 251-i) each both of its longitudinal ends, here in particular a rectangular cutout window 251-i. Analogously, each of the second bar elements 260-i is formed with a respective cutout window 261-1, 261-2, 261-3, 261-4 (hereafter sometimes also collectively designated as 261-i) each both of its longitudinal ends, here in particular a rectangular cutout window 261-i.

All of the cutout windows 251-i, 261-i are formed and arranged such that at all times the rearward protrusions (here: sockets 242-i) of the mounting plates 232-i are each in contact with one of the cutout windows 251-i in the first bar elements 250-i and with one of the cutout windows 261-i in the second bar elements 260-i, in each case at least two points, in particular at opposite sides. Each rearward protrusion passes through one of the cutout windows 251-i of one of the first bar elements 250-i and through one of the cutout windows 261-i of one of the second bar elements 260-i. Because of this, shifting the first and/or second bar elements 250-i, 260-i concurrently shifts the rearward protrusions and thus the mounting plates 232-i as well.

The shifting mechanism is further configured such that shifting one of the first bar elements 250-i in one direction along the second axis results in the other of the two first bar elements 250-i shifting in an opposite direction along the second axis, and such that shifting one of the second bar elements 260-i in one direction along the first axis results in the other of the two second bar elements 260-i shifting in an opposite direction along the first axis. Thus it suffices for a user to cause the shifting of one of the first bar elements 250-i and/or one of the second bar elements 260-i, respectively.

In the embodiment shown in Fig. 5, a first manual actuating element 252 is provided which passes through a wall opening 233 in one of the side walls of the mounting module housing 230 and is linearly shiftable therein. Shifting the first manual actuating element 252 shifts a first linkage 254-1 rigidly connected to it, e.g. integrally formed with it. In the shown embodiment, the first linkage 254-1 is rigidly connected to (or integrally formed with) the first bar element 250-2 shown on the left, although it may also be connected to the one shown on the right. The respective other first bar element 250-1 is rigidly connected to a second linkage 254-2.

The first and the second linkage 254-1, 254-2 are coupled via a first gear mechanism 255 configured such that they are moved in opposite directions. In the shown example, the first and second linkages 254-1, 254-2 each comprise a toothed portion, which engage the first gear mechanism, which is here implemented as a cogwheel into which the toothed portions of the first and second linkages 254-1, 254-2 engage on opposite ends such that they are moving in opposite directions when the manual actuating element 252 is shifted. The cogwheel is rotatably arranged about an axle coupled to the mounting module housing 230. The cogwheel may be replaced by any other kind of coupling mechanism achieving the desired effect, for example by a simple coupling bar.

The same kind of mechanism is provided for the second bar elements 260-i, where the manual actuating element (not visible in Fig. 5) is rigidly connected to (or integrally formed with) a first linkage 264-1 which in turn is rigidly connected to (or integrally formed with) one of the second bar elements 260-1. Said first linkage 264-1 comprises a toothed portion 266 which engages a gear mechanism 265 (here a cogwheel as well) on the rearward side. A second linkage 264-2 rigidly connected to (or integrally formed with) the other one of the second bar elements 260-2 has a toothed portion 266-2 which engages the gear mechanism 265 on the frontward side.

The mounting module 200 has been shown and described in the foregoing with one particular solution for adapting the position of the fastening elements 241-i to the (typically fixed) position of the fastening counter-elements within the electrical device 3000, i.e. by way of the shiftable mounting plates 232-i. However, also other mechanisms for accommodating different kinds of electrical devices 3000 (with different arrangements and/or geometries of fastening counter-elements) can be provided as well. These may include mechanisms configured for adapting the position of the fastening elements 241-i, or mechanisms that allow (some) flexibility for the position of the fastening counter-elements.

For example, the fastening elements 241-i could instead, or additionally, be provided as:
- sliding nuts in corresponding rails;
- a plurality of fastening elements in the mounting surface 235 such that for each kind of electrical devices 3000 out of a list a corresponding selection of fastening elements can be made;
- a fireproof plate, with the fastening counter-elements configured as self-tapping screws; and/or
- as a rotatable plate with a plurality of openings, wherein rotating the plate places different arrangements of said openings (for different kinds of electrical devices 3000) and/or different kinds (e.g. sizes) of openings in a corresponding correct position.

As has been mentioned in the foregoing, also variants completely without the mounting module 200 are possible, in which the trough-shaped recess 111 is configured for a particular kind, or for a plurality of kinds, of electrical devices 3000 which are directly attached to the base module 110. In this case, the base module 100 may be provided with any of the described mechanisms for accommodating different kinds of electrical devices 3000 with different arrangements and/or geometries of fastening counter-elements as well.

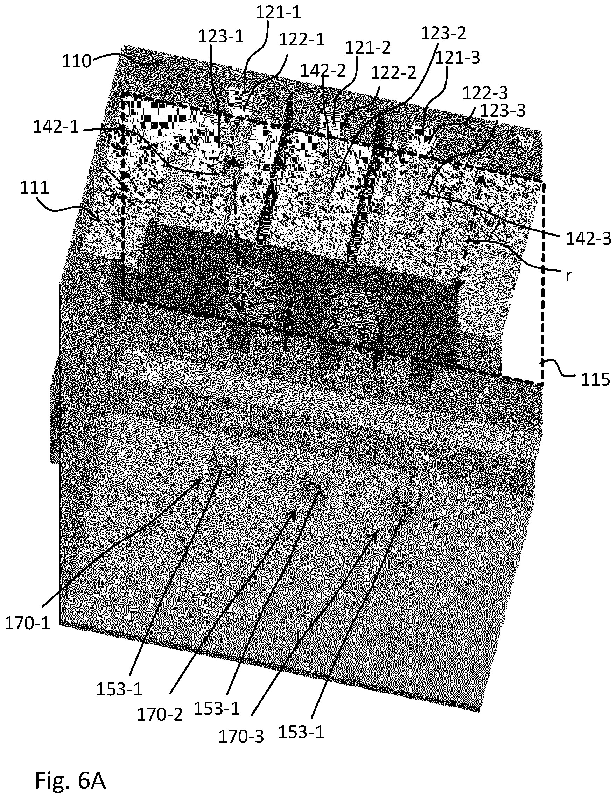

Fig. 6A shows a three-dimensional view of the base module 100 with the mounting module 200 attached to it. Clearly visible are the two-pronged first device connection terminals 142-i arranged adjacent to the first openings 121-i, here in a finger-safe way, in particular according to the IP20 International Protection Class. Fig. 6A also illustrates how the mounting surface 230 is set back from the mouth 115 of the trough-shaped recess 111 by a distance r. Along the same direction, the first device connection terminals 142-i are set back from their respective first opening 121-i along the attaching direction. Accordingly, first device connectors intended for contacting the first device connection terminals 142-i have to be inserted for a specific distance into the first openings 121-i before an electrical contact is achieved.

Each of the first openings 121-i is formed with a first portion 122-1, 122-2, 122-3 (hereafter sometimes also collectively designated as 122-i) that is formed in the topmost surface (in the attaching direction), and with a second portion 123-1, 123-2, 123-3 (hereafter sometimes also collectively designated as 123-i) that extends from the corresponding first portion 122-i into the trough-shaped recess 111. Thus, a connector element being moved in the attaching direction can enter the opening 121-i via its first portion 122-i while the connector element is attached to an electrical device 3000 that is concurrently moved (in particular together with the mounting module 200 to which it is attached) along the attaching direction into the trough-shaped recess 111. After the connector element has entered the opening 121-i via its first portion 122-i, it can continue in the attaching direction by crossing into the base module housing 110 via the corresponding second portion 123-i.

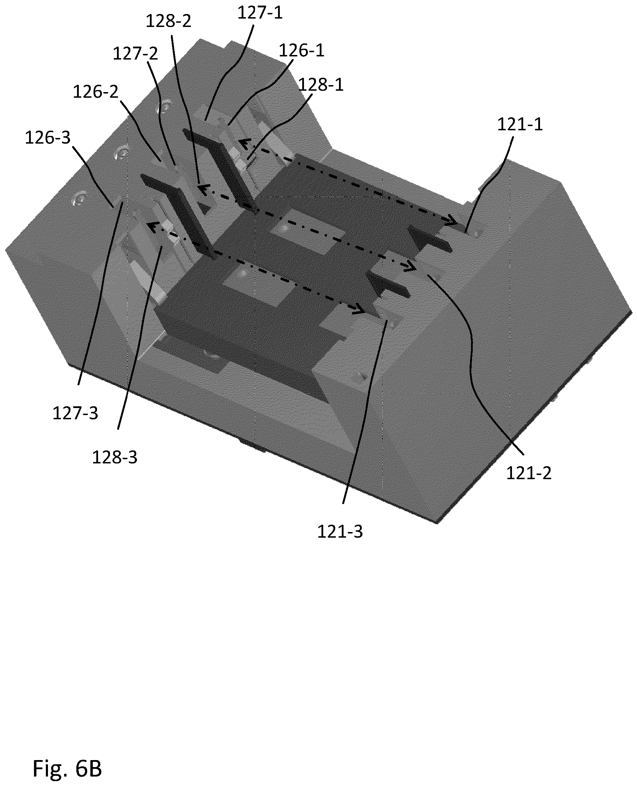

The same may be analogously true for the second openings 126-i, as will be described with respect to Fig. 6B momentarily.

Fig. 6A also illustrates that the base module housing 110 may comprise output openings 170-1, 170-2, 170-3 (hereafter sometimes also collectively designated as 170-i) through each of which a respective output terminal 153-i is accessible, preferably in a finger-safe manner, more preferably according to IP20 or higher. In the shown embodiment, the output openings 170-i are arranged to be accessible along a direction perpendicular to the attaching direction (i.e., depth D direction) and perpendicular to the direction in which the busbars 10-i extend (i.e., the width W direction), here: the length L direction.

Depending on the size of the intended electrical connection to the output terminals 153-i, any, each, or all of the output openings 170-i may be provided with a corresponding cover in order to keep the output openings 170-i finger-safe. The covers may, for example, be single pieces that can be moved away to provided access to the output terminals 153-i, or multi-piece elements that open up or part way to provide the access.

Fig. 6B shows essentially the same elements as Fig. 6A, albeit from a slightly different perspective. Therefore, it shows how the second openings 126-i each comprise a corresponding first portion 127-i and a corresponding second portion 128-i. Just as the first portions 122-i of the first openings 121-i, the first portions 127-i of the second openings 126-i are arranged in a surface of the base module 110 facing against the depth D or attaching direction. Also, just as the second portions 123-i of the first openings 121-i, the second portions 128-i of the second openings 126-i face the trough-shaped recess 111. Specifically, each second portion 123-i of one of the first openings 121-i faces (preferably exactly) a second portion 128-i of a corresponding one of the second openings 126-i (see dash-dotted double-arrow lines in Fig. 6A and 6B).

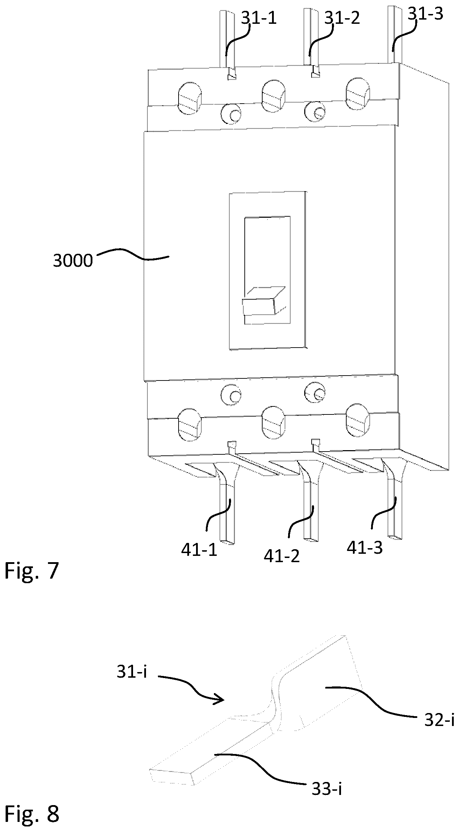

Fig. 7 shows a schematic depiction of an electrical device 3000 provided with first connector elements 31-1, 31-2, 31-3 (hereafter sometimes also collectively designated as 31-i) of the electrical adapter system 1000 and/or of the electrical assembly 2000, and with second connector elements 42-1, 42-2, 42-3 (hereafter sometimes also collectively designated as 42-3) of the electrical adapter system 1000 and/or of the electrical assembly 2000.

The first connector elements 31-i are configured and attached such that they can simultaneously be inserted into the first openings 121-i of the base module housing 110 in order to then contact the first device connection terminals 142-i therein, and the second connector elements 42-i are configured and attached such that they can simultaneously be inserted into the second openings 126-i of the base module housing 110 in order to then contact the second device connection terminals 152-i therein. Preferably, the first and second connector elements 31-i, 42-i are configured such that, when the electrical device 3000 is moved towards the mounting surface 230 of the mounting module 200 along the attaching direction, they all enter their respective openings (essentially) simultaneously.

Fig. 8 shows an exemplary design of a first connector element 31-i. First and second connector elements 31-i, 41-i may have the same shape or different shapes, and the shape shown in Fig. 8 may equally apply to the second connector elements 41-i. It is also possible that there is a variation in shape between the first connector elements 31-i among themselves and/or among the second connector elements 41-i among themselves, for example when the internal connection terminals of the electrical device 3000 are not exactly aligned with the same distances from one another as the first or second device connection terminals 142-i, 152-i, respectively.

In the shown embodiment, the first connector elements 31-i are formed with a first end 32-i configured to be inserted into the first device connection terminals 142-i, and with a second end 33-i configured to be coupled to an internal connection terminal of the electrical device 3000. Thus, the design of the second end 33-i depends on the type of electrical device 3000, while the design of the first end 32-i depends on the specific implementation of the first device connection terminals 142-i. Analogously the same applies for the second connector elements 41-i and the second device connection terminals 152-i.

The first end 32-i and the second end 33-i are electrically coupled with one another, preferably rigidly coupled with one another, and more preferably integrally formed with one another. In the shown example, the first connector elements 31-i and the second connector elements 41-i are each formed as a monolithic piece of metal, wherein the first end 32-i is formed as a flat strip, and the second end 33-i is formed as another flat strip arranged in perpendicular to the first end 32-i. It will, however, be readily understood that the connector elements 31-i, 41-i may be designed with any necessary shape or size.

For example, instead of the corresponding connection terminals 142-i, 152-i having a two-pronged shape in which a single-bladed connector element 31-i, 41-i is configured to enter, the connector elements may be formed with a two-pronged shape that is configured and sized to surround single-bladed connection terminals.

Moreover, although the connector elements 31-i, 41-i have been shown to extend in parallel to the length L direction of the base module 100, they may also extend in different directions from the electrical device 3000, for example, along the attaching, or depth D, direction. They may even be formed such that they are configured to run around the base module 100 towards its side(s) or the rear side. The connector elements may be covered with insulating (e.g. plastic) housing parts.

Any of the described modules 100, 200 may be configured in a single-pole or in a multi-pole version. Modules may have adjustable dimensions, in particular width W, in order to be compatible with various connection geometries of electrical devices 3000.

Comparing Fig. 7 to Fig. 6, it can be understood how the electrical device 3000 may be provided with the connector elements 31-i, 41-i, then (or previously) be mounted on the mounting module 200, and then be attached, along the attaching direction (i.e., depth direction D), together with the mounting module 200 in the trough-shaped recess 111 of the base module 100. The first ends 32-i of the connector elements 31-i, 41-i will, during this movement, enter their respective openings 121-i, 126-i, and only come into contact with the respective device connection terminals 142-i, 152-i when the first ends 32-i have progressed enough into the base module housing 110 that finger contact with them has become impossible.

As has been described in the foregoing, at the end of this movement along the attaching direction, the mounting module 200 (with the electrical device 3000 mounted thereto) will be automatically latched by the latching elements 161-i which are preferably pre-loaded in a direction towards the trough-shaped recess 111 and are only pressed apart by the presence of the mounting module 200. The phase divider sheets 123-i may, during the attaching procedure, be mounted in the corresponding slots in the base module housing 110, or in corresponding slots in the electrical device 3000, or may be inserted into both only when the mounting module 200 (with the electrical device 3000) has already been attached.

It shall be understood that the connection mechanism of two-pronged device connection terminals 142-i, 152-i with flat connector elements 31-i, 41-i may also be realized the other way around, with the connector elements 31-i, 41-i being provided with two-pronged contacts, and the device connection terminals 142-i, 152-i with corresponding flat shapes configured to be sandwiched on both sides by the two-pronged contacts. In both cases, the respective two-pronged element may be formed rigidly, or elastically, such that the two-pronged elements may be elastically pushed away from one another and thus grip the element grasped in between more tightly.

Additionally, instead of flat shapes, also round shapes or other shapes may be provided that are inserted between rigid or elastic two-pronged shapes.

Fig. 9 selectively shows some of the elements on the rear side of the base module 100 as well as some elements inside of it, with most other parts removed for better visibility: for example, it shows large parts of each of the first connection rails 141-i, and how they are arranged with respect to their respective busbar connection terminal 190-i.

Between the two prongs of each busbar connection terminal 190-i, a respective contact piece 191-1, 191-2, 191-3 (hereafter sometimes also collectively designated as 191-i) is arranged. Each contact piece 191-i (or: "busbar contact piece") is preferably pressed (e.g., using a corresponding spring) against the front side of the corresponding busbar 10-i and carries the electrical current between the corresponding busbar 10-i and the corresponding first connection rail 141-i. Thus, each contact piece 191-i is an electrically conductive, preferably monolithic metallic, element. It may be structured, at its rear side (i.e. the one facing the busbars 10-i) with ridges that are configured and arranged to pass through corresponding slits in a (e.g. finger-safe) protective cover covering the busbars 10-i before contacting the front side of the busbars 10-i.

Of the sensor units 50-i that can be arranged about the busbar connection terminals 190-i, in particular around the busbar connection terminals 190-i and/or around the spacers 191-i, only the sensor units 50-2, 50-3 are shown. As has been mentioned before, sensor unit lines 51 for transmitting data from (and optionally also to) the sensor units 50-i may be led from each sensor unit 50-i into the base module housing 110.

Each and any sensor units 50-i may be a current transformer, a Rogowski coil, or any other type of sensing electronics.

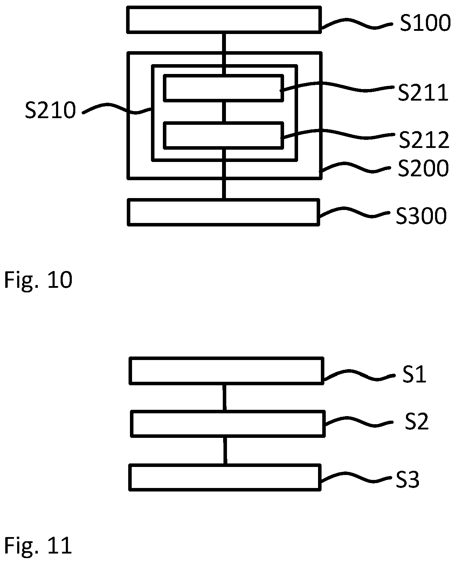

Fig. 10 shows an exemplary flow diagram for illustrating a method according to another embodiment of the present invention, i.e., a method for connecting an electrical device 3000 to a busbar system. The method can be performed with any electrical adapter system or any electrical assembly according to any embodiment of any aspect of the present invention, but also separately therefrom. Thus, the method may be adapted, modified, or refined, according to any embodiment, modification, option, or refinement, described with respect to the electrical adapter system or the electrical assembly, and vice versa. Thus, for clarification reference signs of the preceding Fig. 1-9 will be used when describing details of the method.

In a step S100 of the method, a base module 100 is mounted to a plurality of busbars 10-i of a busbar system.

In a step S200, an electrical device 3000 is mounted to a mounting surface 230 of a mounting module 200 while the mounting module 200 is separated from the base module 100.

The mounting S200 of the electrical device 3000 to the mounting surface 230 may comprise an adapting S210 of the mounting surface 230 to the specifics (in particular the geometrical arrangement and placement of fastening counter-elements) of the electrical device 3000. The adapting S210 may in particular comprise a step S211 of adjusting distances between fastening elements 241-i along a first axis, in particular by manipulating a manual actuating element 252 as has been described in the foregoing, and/or a step S212 of adjusting distances between fastening elements 241-i along a second axis perpendicular to the first axis, in particular by manipulating another manual actuating element as has been described in the foregoing.

In a step S300, the mounting module 200, with the electrical device 3000 mounted to it, is attached to the base module 100 by moving it along an attaching direction D into a trough-shaped recess 111 in a base module housing 110 of the base module 100. At least first connector elements 31-i that are rigidly connected with the electrical device 3000 are inserted, concurrently with the attaching S300 of the mounting module 200 to the base module 100, into corresponding first portions 122-i of first openings 121-i within the base module housing 110 and then from there on, along second portions 123-i of the first openings 121-i that extend into (i.e., along the wall or walls of) the trough-shaped recess 111 in the attaching direction D, where, after being moved further along the attaching direction D, they are inserted into first device connection terminals 142-i which are electrically connected to a respective one of the plurality of busbars 10-i.

Preferably, essentially concurrently with the attaching S300, second connector elements 41-i that are rigidly connected with the electrical device 3000 are inserted into corresponding first portions 127-i of second openings 126-i within the base module housing 110 and then from there on, along second portions 128-i of the second openings 126-i that extend into (i.e., along the wall or walls of) the trough-shaped recess 111 in the attaching direction D, where, after being moved further along the attaching direction D, they are inserted into second device connection terminals 152-i which are electrically connected to a respective one of a plurality of output terminals 153-i.

Fig. 11 shows an exemplary flow diagram for illustrating a method according to yet another embodiment of the present invention, i.e., a method for connecting an electrical device 3000 to a busbar system. The method can be performed with any electrical adapter system or any electrical assembly according to any embodiment of any aspect of the present invention, but also separately therefrom. Thus, the method may be adapted, modified, or refined, according to any embodiment, modification, option, or refinement, described with respect to the electrical adapter system or the electrical assembly, and vice versa. Thus, for clarification reference signs of the preceding Fig. 1-9 will be used when describing details of the method.

In a step S1, a base module 100 is mounted to a plurality of busbars 10-i of a busbar system.

In a step S2, the electrical device 3000 is attached to the base module 100 by moving it along an attaching direction D into a trough-shaped recess 111 in a base module housing 110 of the base module 100.

At least first connector elements 31-i that are rigidly connected with the electrical device 3000 are inserted, concurrently with the attaching of the electrical device 3000 to the base module 100, into corresponding first portions 122-i of first openings 121-i within the base module housing 110 and then from there on, along second portions 123-i of the first openings 121-i that extend into (i.e., along a wall or along walls of) the trough-shaped recess 111 in the attaching direction D, where, after being moved further along the attaching direction D, they are inserted into first device connection terminals 142-i which are electrically connected to a respective one of the plurality of busbars.

Preferably, moreover, at least second connector elements 41-i that are rigidly connected with the electrical device 3000 are inserted, concurrently with the attaching of the electrical device 3000 to the base module 100, into corresponding first portions 127-i of second openings 126-i within the base module housing 110 and then from there on, along second portions 128-i of the second openings 126-i that extend into the trough-shaped recess 111 in the attaching direction D, where, after being moved further along the attaching direction D, they are inserted into second device connection terminals 152-i which are electrically connected to a respective output terminal 153-i.

In all cases, "concurrently with the attaching" (of the mounting module 200 in step S300 or of the base module 100 in step S3) shall be understood to mean in particular that it is the same movement that performs both the attaching as well as the inserting of the first or second connector elements 41-i into the respective openings. The order in which these events occur may differ depending on the specific design. Typically, the inserting of the connector elements 31-i, 41-i into the first portions 122-i, 127-i may occur first, while the final position of the mounting module 200 or base module 100 to be attached is typically reached after the connector elements 31-i, 41-i have been inserted into the device connection terminals 141-i, 152-i.

One basic idea of the invention may be formulated as follows: The present invention provides an electrical adapter system 1000 for a busbar system, comprising:
a base module 100 and a mounting module 200;
the mounting module 200 comprising a mounting surface 235 for mounting an electrical device 3000 thereto, the mounting module 200 and the base module 100 being configured such that the mounting module 200 is attachable, by being moved along an attaching direction D, to the base module 100 within the trough-shaped recess 111;
wherein the base module housing 100 is formed with first openings 121-i for device connection terminals 142-i, each first opening 121-i having a first portion 122-i for allowing a first end 32-i of a respective first connector element 31-i of the electrical device 3000 to enter when being moved along the attaching direction D, and a second portion 123-i that extends from the corresponding first portion 122-i along the attaching direction D for allowing the first ends 32-i of the first connector elements 31-i to travel along in the attaching direction D (or: along the attaching direction D).

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the systems and aircraft infrastructure can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of Reference Signs

- 10-i: busbar
- 31-i: first connector element
- 32-i: first end
- 33-i: second end
- 41-i: second connector element
- 50-i: sensor unit
- 51: sensor unit lines
- 52: sensor data terminal
- 100: base module
- 110: base module housing
- 111: trough-shaped recess
- 112-i: side wall of the trough-shaped recess
- 113: bottom of the trough-shaped recess
- 114: unlatching opening
- 115: mouth of the trough-shaped recess
- 121-i: first openings
- 122-i: first portion of first opening
- 123-i: second portion of first opening
- 126-i: second openings
- 127-i: first portion of second opening
- 128-i: second portion of second opening
- 130: rear plate of base module
- 131: rear side of rear plate
- 132: front side of rear plate
- 141-i: first connection rail
- 142-i: first device connection terminal
- 151-i: second connection rail
- 152-i: second device connection terminal
- 153-i: output terminal
- 161-i: latching element
- 162-i: unlatching actuator
- 163-i: first phase divider sheets
- 164-i: second phase divider sheets
- 165-i: rocker
- 170-i: output openings
- 190-i: busbar connection terminal
- 191-i: contact piece
- 192-i: clamping hook
- 200: mounting module
- 230: mounting module housing
- 231-i: cutout windows
- 232-i: mounting plate
- 233: wall opening
- 235: mounting surface
- 241-i: fastening element
- 242-i: socket
- 250-i: first bar element
- 251-i: cutout window
- 252: manual actuating element
- 254-i: linkage
- 255: gear mechanism
- 260-i: second bar element
- 261-i: cutout window
- 264-i: linkage
- 265: gear mechanism
- 266-i: toothed portion
- 1000: electrical adapter system
- 2000: electrical assembly
- 3000: electrical device
- S1..S3: method steps
- S100. S300: method steps

## Claims

1. Electrical adapter system (1000) for a busbar system, comprising
a base module (100) and a mounting module (200);
the base module (100) comprising a base module housing (110) having a trough-shaped recess (111);
the mounting module (200) comprising a mounting surface (230) for mounting an electrical device (3000) thereto, the mounting module (200) and the base module (100) being configured such that the mounting module (200) is attachable, by being moved along an attaching direction (D), to the base module (100) within the trough-shaped recess (111), wherein, when the mounting module (200) is attached to the base module (100) in the trough-shaped recess (111), the mounting surface (230) is set back along the attaching direction (D) from a mouth (115) of the trough-shaped recess (111) ;
the base module (100) comprising a plurality of busbar connection terminals (190-i), each busbar connection terminal (190-i) configured to be mounted on a corresponding busbar (10-i) of a busbar system for an electrical connection thereto;
the base module (100) further comprising a plurality of first device connection terminals (142-i) electrically connected to a corresponding one of the plurality of busbar connection terminals (190-i);
wherein each device connection terminal (142-i) is configured to receive a first end (32-i) of a respective first connector element (31-i);
wherein the base module housing (100) is formed with a first opening (121-i) for each of the first device connection terminals (142-i), each first opening (121-i) having a first portion (122-i) for allowing the first end (32-i) of the respective first connector element (31-i) to enter when being moved along the attaching direction (D), and a second portion (123-i) that extends from the corresponding first portion (122-i) into the trough-shaped recess (111) along the attaching direction (D) for allowing the first ends (32-i) of the first connector elements (31-i) to travel along in the attaching direction (D).

2. The system (1000) of claim 1,
wherein each first device connection terminal (142-i) is accessible only via the corresponding first opening (121-i) within the base module housing (110), wherein the first openings (121-i) are finger-safe.

3. The system (1000) of claim 2,
wherein each first device connection terminal (142-i) is set back along the attaching direction (D) into the base module housing (110) from the respective first opening (121-i).

4. The system (1000) of any of claims 1 to 3,
wherein the device connection terminals (142-i) are arranged along a line perpendicular to the attaching direction (D).

5. The system (1000) of any of claims 1 to 4,
wherein the base module (100) comprises a plurality of second device connection terminals (126-i), each configured to receive a first end (32-i) of a respective second connector element (41-i).

6. The system (1000) of claim 5,
wherein the base module (100) further comprises a plurality of output terminals (153-i), each electrically connected to a corresponding one of the second device connection terminals (126-i) .

7. The system (1000) of any of claims 1 to 6,
further comprising a plurality of first connector elements (31-i), wherein the first ends (32-i) of the first connector elements (31-i) are formed as flat strips, the first device connection terminals (142-i) are formed as narrow slots extending along the attaching direction (D), and the first ends (32-i) of the first connector elements (31-i) are electrically connected to second ends (33-i) of the first connector elements (31-i), which are connected or configured to be connected to first device terminals of the electrical device (3000).

8. The system (1000)of claim 7,
wherein the first ends (32-i) of the first connector elements (31-i) are rigidly, and preferably integrally, connected to the second ends (33-i) of the first connector elements (31-i).

9. The system (1000) of any of claims 1 to 8,
wherein the base module comprises a plurality of latching elements (161-i) configured to latch the mounting module (200) to the base module (100) for attaching the mounting module (200) to the base module (200).

10. The system (1000) of any of claims 1 to 9,
wherein at least one sensor unit (50-i) is arranged at or about at least one of the busbar connection terminals (190-i) for measuring at least one electrical parameter of the current therethrough.

11. An electrical (2000) assembly,
comprising the system (1000) of any of claims 1 to 10, and an electrical device (3000) mountable or mounted to the mounting surface (230) of the mounting module (200).

12. Method for connecting an electrical device (3000) to a busbar system, comprising at least steps of:
mounting (S100) a base module (100) to a plurality of busbars (10-i) of a busbar system;
mounting (S200) the electrical device (3000) to a mounting surface (230) of a mounting module (200) while the mounting module (200) is separated from the base module (100);
attaching (S300) the mounting module (200), with the electrical device (3000) mounted to it, to the base module (100) by moving it along an attaching direction (D) into a trough-shaped recess (111) in a base module housing (110) of the base module (100),
wherein at least first connector elements (31-i) that are rigidly connected with the electrical device (3000) are inserted, concurrently with the attaching of the mounting module (200) to the base module (100), into corresponding first portions (122-i) of first openings (121-i) within the base module housing (110) and then from there on, along second portions (123-i) of the first openings (121-i) that extend into the trough-shaped recess (111) in the attaching direction (D), where, after being moved further along the attaching direction (D), they are inserted into first device connection terminals (142-i) which are electrically connected to a respective one of the plurality of busbars (10-i).

13. The method of claim 12,
wherein the mounting module (200) is attached (S300) while the plurality of busbars (10-i) is current-carrying.

14. A method for connecting an electrical device (3000) to a busbar system, comprising at least steps of:
mounting (S1) a base module (100) to a plurality of busbars (10-i) of a busbar system;
attaching (S2) the electrical device (3000) to the base module (100) by moving it along an attaching direction (D) into a trough-shaped recess (111) in a base module housing (110) of the base module (100),
wherein at least first connector elements (31-i) that are rigidly connected with the electrical device (3000) are inserted, concurrently with the attaching of the electrical device (3000) to the base module (100), into corresponding first portions (122-i) of first openings (121-i) within the base module housing (110) and then from there on, along second portions (123-i) of the first openings (121-i) that extend into the trough-shaped recess (111) in the attaching direction (D), where, after being moved further along the attaching direction (D), they are inserted into first device connection terminals (142-i) which are electrically connected to a respective one of the plurality of busbars.

15. The method of claim 14, wherein at least second connector elements (41-i) that are rigidly connected with the electrical device (3000) are inserted, concurrently with the attaching of the electrical device (3000) to the base module (100), into corresponding first portions (127-i) of second openings (126-i) within the base module housing (110) and then from there on, along second portions (128-i) of the second openings (126-i) that extend into the trough-shaped recess (111) in the attaching direction (D), where, after being moved further along the attaching direction (D), they are inserted into second device connection terminals (152-i) which are electrically connected to a respective output terminal (153-i).
